# EUROPÄISCHE PATENTSCHRIFT

(11) **EP 1 444 125 B1**
(45) Veröffentlichungstag und Bekanntmachung des Hinweises auf die Patenterteilung: **14.02.2007**
(21) Anmeldenummer: 02802649.0
(22) Anmeldetag: 06.11.2002
(51) Int. Cl.: B62D 53/12

(54) **STECKKUPPLUNGSSYSTEM ZUM VERBINDEN VON LEITUNGEN ZWEIER FAHRZEUGE**
PLUG-TYPE COUPLING SYSTEM FOR CONNECTING CABLES OF TWO VEHICLES
SYSTEME DE COUPLAGE PAR ENFICHAGE PERMETTANT DE RACCORDER DES CABLES DE DEUX VEHICULES

(30) Priorität: 09.11.2001 DE 10155056
(43) Veröffentlichungstag der Anmeldung: 11.08.2004
(73) Patentinhaber: ERICH JAEGER GmbH + Co. KG, 61169 Friedberg (DE); Jost-Werke GmbH & Co. KG, 60528 Frankfurt am Main (DE)
(72) Erfinder: WIESE, Wolfgang, 61389 Schmitten (DE); RAUTENBERG, Kurt, 61267 Neu-Anspach (DE); MATTERN, Kirstin, 61209 Echzell (DE); RUEBSAM, Carsten, 36088 Hünfeld (DE); KRÜGER, Achim, 64579 Gernsheim (DE); STRÜTT, Achim, 64560 Riedstadt (DE); RICHTER, Martin, 60316 Frankfurt am Main (DE); ALGÜERA, José, 63739 Aschaffenburg (DE)
(74) Vertreter: Fuchs Mehler Weiss & Fritzsche
(86) Internationale Anmeldenummer: PCT/EP2002/012366
(87) Internationale Veröffentlichungsnummer: WO 2003/039940

(56) Entgegenhaltungen:
- EP-A1- 1 147 973
- EP-A2- 0 084 712
- DE-U1- 20 008 462
- US-A- 3 941 408
- US-B1- 6 179 319

## Beschreibung

Die Erfindung betrifft ein Steckkupplungssystem zum Verbinden von Leitungen zwischen einem ersten und einem zweiten Fahrzeug gemäß dem Oberbegriff des Anspruchs 1. Die Erfindung bezieht sich auch auf eine Sattelkupplung, eine Steckvorrichtung und einen Königszapfen, an denen Komponenten des Sattelkupplungssystems verwirklicht sind. Ferner betrifft die Erfindung eine Verwendung des Steckkupplungssystems.

Die Leitungen können Versorgungsleitungen z.B. für Energie oder Druckluft, oder auch Signalübertragungsleitungen sein.

Steckkupplungssysteme sind in unterschiedlichen Ausführungen bekannt. Im einfachsten Fall handelt es sich um einen Stecker und eine Steckerbuchse, die jeweils an mehr oder weniger elastischen Leitungen befestigt sind. Nachdem beide Fahrzeuge mechanisch miteinander verbunden sind, ist es erforderlich, auch die Leitungen miteinander zu verbinden. Hierzu muß eine Person von Hand den Stecker in die am anderen Fahrzeug vorgesehene Steckerbuchse stecken. Vor dem Trennen der Fahrzeuge muß entsprechend das Steckkupplungssystem wieder getrennt werden. Wenn dies versehentlich vergessen wird, wird das Steckkupplungssystem auseinandergerissen und beschädigt.

Es sind daher Bestrebungen im Gang, das Verbinden und Trennen solcher Steckkupplungssysteme einerseits zu automatisieren und andererseits sicherer zu machen, wobei fahrzeugspezifische Komponenten mit dem Steckkupplungssystem verknüpft oder derartige Komponenten in das System einbezogen werden.

Bei Sattelzügen wurde daher versucht, die Versorgungsleitungen durch den Königszapfen zu führen, der im gekoppelten Zustand beider Fahrzeuge mit einem entsprechenden Gegenstück in der Sattelkupplung zusammenwirkt. Ein derartiges Steckkupplungssystem wird beispielsweise in der EP 0 816 211 A2 beschrieben.

Diese Vorrichtung hat jedoch den Nachteil, daß der Querschnitt des Königszapfens nur eine begrenzte Anzahl an Versorgungsleitungen zuläßt, wobei der Königszapfen zusätzlich in seiner Stabilität beeinträchtigt wird.

Die DE-OS 20 39 340 beschreibt eine verschleißarme Sattelkupplung mit einer automatischen Elektrik-Luftkupplung, die zusammenwirkend mit einer vollautomatischen Sattelkupplung, das ein An- und Abkuppeln eines Aufliegers eines Sattelzuges ermöglicht, ohne daß der Fahrer das Fahrerhaus zu verlassen braucht. Die automatische Elektrik-Luftkupplung wird durch ein zweiteilig, den Königszapfen umgreifendes Kupplungsstück realisiert, welches an seiner Stirnseite Kontakte aufweist, die bei Ankupplung des Aufliegers mit Kontakten im vorderen Verschlußbereich der Sattelkupplung zusammenwirken. Der wesentliche Nachteil dieses Systems liegt in der hohen mechanischen Belastung des Kupplungsstückes, das durch eine Vielzahl von in Längsrichtung verlaufenden Bohrungen zur Durchführung der Kabel bzw. der Druckluft zusätzlich geschwächt ist. Ein weiteres großes Problem stellt die betriebssichere Kontaktierung des Kupplungsstückes mit der Sattelkupplung in dem mit Schmierfett versehenen Verschlußbereich dar, da das Schmierfett die Kontakte verschmutzt und ein Stromfluß nicht immer gewährleistet ist.

Die US 5,060,964 offenbart eine Sattelkupplung, bei der die Kontakte im Endbereich der Sattelkupplungshörner beidseitig der Einführöffnung ortsfest angeordnet sind. Diese wirken mit ebenfalls ortsfesten Kontakten auf der Unterseite des Aufliegers zusammen. Eine Relativbewegung zwischen zugfahrzeugseitigen und aufliegerseitigen Kontakten wird durch eine auf einem drehbaren Sockel gelagerte Sattelkupplung vermieden. Eine derartige Sattelkupplung, bei der die Kraftübertragung zwischen Zugfahrzeug und Auflieger punktförmig über den drehbaren Sockel in den Leiterrahmen des Zugfahrzeuges abgeleitet wird, läßt sich bei den heutigen Zugfahrzeugen kaum ohne erhebliche Änderungen in Form von Versteifungen am Zugfahrzeug installieren. Darüber hinaus wird die Bauhöhe der Sattelkupplung zusätzlich erheblich erhöht, was auf keine Akzeptanz bei den Fahrzeugbauem und Spediteuren stößt, da bei einer vorgegebenen maximalen Fahrzeughöhe das Ladevolumen verkleinert wird.

Die US 3,941,408 zeigt eine Sattelkupplung gemäß dem Oberbegriff des Anspruchs 1.

Es ist daher Aufgabe der Erfindung, ein Steckkupplungssystem bereitzustellen, das beim An- und Abkuppeln des Aufliegers an ein Zugfahrzeug ein komfortables und betriebssicheres Verbinden der Leitungen ermöglicht. Weitere Teilaufgaben umfassen die Ausgestaltung der Baugruppen Sattelkupplung, Steckvorrichtung und Königszapfen hinsichtlich einer hohen betrieblichen Verfügbarkeit und Kompatibilität zu bestehenden Sattelkupplungssystemen.

Die Aufgabe wird mit einem Steckkupplungssystem gemäß dem Anspruch 1 gelöst.

Hierzu ist der am zweiten Fahrzeug angeordnete Stecker in einer ortsfesten Steckvorrichtung untergebracht und mit dem Versorgungsnetz des zweiten Fahrzeugs, insbesondere den elektrischen Leitungen, verbunden. Die am ersten Fahrzeug angeordnete Steckerbuchse ist an den Leitungen des ersten Fahrzeugs angeschlossen und kann mittels einer Antriebsvorrichtung zur Verbindung mit dem ortsfesten Stecker des zweiten Fahrzeugs an diesen herangeführt werden. Die Antriebseinrichtung kann entweder vom Fahrer in Gang gesetzt werden oder automatisch betätigt werden, wenn beide Fahrzeuge mechanisch gekuppelt sind. Vor dem Entkuppeln der Fahrzeuge kann die Antriebseinrichtung zum Trennen des Steckkupplungssystems zurückgefahren werden.

Zur Verringerung des Verschleißes und der Gefahr von Beschädigungen kann die Verbindung zwischen Stecker und Steckerbuchse bei Nichtbenutzung von Verbrauchern des zweiten Fahrzeuges während der Fahrt getrennt und bei Bedarf wieder hergestellt werden.

Die eingefahrene Steckerbuchse läßt sich in einem Gehäuse, geschützt von äußeren mechanischen Beanspruchungen und Verschmutzungen, unterbringen. Mit Hilfe eines derartigen Steckkupplungssystems läßt sich eine betriebssichere Verbindung der Leitungen von Zugfahrzeug und Auflieger erzielen, ohne daß der Fahrer nach dem An- oder Abkuppeln von Hand die größtenteils verschmutzten und schlecht zugänglichen Leitungen anschließen muß.

In einer besonderen Ausführungsform umfaßt das System ein am ersten Fahrzeug angeordnetes Datenerfassungs- und -auswertegerät, das einerseits mit der Antriebsvorrichtung und andererseits mit einem am ersten Fahrzeug angeordneten ersten Sensor zur Sensierung der Kupplungsposition der Steckvorrichtung verbunden ist. Diese Ausführungsform erkennt die Anwesenheit einer ankuppelbaren Steckvorrichtung und leitet diese information an das Datenerfassungs- und -auswertegerät weiter, welches die Antriebsvorrichtung zum Vorschub der Steckerbuchse ansteuert. Dadurch wird sichergestellt, daß die Antriebsvorrichtung nur dann in Gang gesetzt werden kann, wenn die Steckvorrichtung in der richtigen Position zum Stecker angeordnet ist. Ein unbeabsichtigtes Ausfahren des Steckers wird vermieden.

In einer vorteilhaften Ausgestaltung ist das erste Fahrzeug ein Zugfahrzeug mit einer eine Einführöffnung aufweisenden Sattelkupplung und das zweite Fahrzeug ein Auflieger. In dieser bevorzugten Ausführungsform ist das Steckkupplungssstem unmittelbar an der Sattelkupplung, insbesondere der Sattelkupplungsplatte, angeordnet. Wie in Verbindung mit der Sattelkupplung und der Steckvorrichtung beschrieben wird, ist vorzugsweise die Steckerbuchse in oder an der Sattelkupplungsplatte und der Stecker an einen am Königszapfen angeordneten Bauteil angeordnet, so dass beim Einkoppeln Stecker und Steckerbuchse in eine gegenüberliegende Position gebracht werden. Diese Anordnung ist bevorzugt, wobei es auch möglich ist, Stecker und Steckerbuchse zu vertauschen. Wenn die gegenüberliegende Position erreicht ist, ist es nur noch erforderlich, Stecker und Steckerbuchse beispielsweise durch Verschieben von Stecker und/oder Steckerbuchse, miteinander zu verbinden. Stecker und/oder Steckerbuchse weisen einzeln oder beide hierzu eine entsprechende Antriebseinrichtung auf. Das Steckkupplungssystem ist dadurch einfach und in der Funktion zuverlässig aufgebaut.

Vorzugsweise ist der erste Sensor im Bereich der Einführöffnung der Sattelkupplung angeordnet. Die Einführöffnung unterliegt im Fahrbetrieb einer vergleichsweise geringen Belastung, so daß etwaige Bohrungen für die Aufnahme des Sensors nicht die Stabilität der Sattelkupplung schwächen. Darüber hinaus sind im Bereich der Einführöffnung keine Verschlußhebel oder andere bewegliche Teile vorhanden, so daß ein ausreichender Bauraum für die Unterbringung des ersten Sensors vorhanden ist.

Vorteilhafterweise ist das Datenerfassungs- und -auswertegerät mit einem zweiten Sensor zur Sensierung des Verriegelungszustandes der Sattelkupplung verbunden. Bei einer verriegelten Sattelkupplung befinden sich Steckerbuchse und Stecker in einer definierten, vorherbestimmten Position zueinander.

Die Information über den Kupplungszustand kann dazu genutzt werden, daß das Datenerfassungs- und -auswertegerät nur dann ein Freigabesignal an die Antriebsvorrichtung zum Ausfahren der Steckerbuchse abgibt, wenn mindestens einer der beiden Sensoren ein Freigabesignal an die Datenerfassungs- und -auswerteeinheit abgibt. Vorzugsweise fährt die Steckerbuchse bei verriegelter Sattelkupplung und Anwesenheit der Steckvorrichtung aus. Die Einbeziehung von Informationen über die Position der Steckvorrichtung und/oder des Verriegelungszustandes der Sattelkupplung ermöglicht über die Datenerfassungs- und -auswerteeinheit ein automatisches Verbinden und Trennen des Steckkupplungssystems. Bei einem Fehlen des Freigabesignals kann die Antriebsvorrichtung nicht in Gang gesetzt werden, wodurch die Betriebssicherheit des Systems erhöht wird.

Darüber hinaus ist die Datenerfassungs- und -auswerteeinheit vorzugsweise derart ausgelegt, daß nach dem Entriegeln der Sattelkupplung aufgrund des damit verbundenen Signals des zweiten Sensors die Antriebseinrichtung zum Einfahren der Steckerbuchse in Gang gesetzt wird.

In einer vorteilhaften Ausführungsform sind die Steckerbuchse und der Stecker jeweils vierpolig ausgelegt. Hierbei reichen zwei Pole für eine elektrische Verbindung aus, aus Sicherheitsgründen sind jedoch zwei weitere Pole vorhanden. Darüber hinaus kann auch eine Steckverbindung für Druckluft vorgesehen sein.

Die erfindungsgemäße Sattelkupplung, die im Rahmen eines solchen Steckkupplungssystems eingesetzt werden kann, ist dadurch gekennzeichnet, daß im Bereich ihrer Einführöffnung an oder in einem der beiden Kupplungshörner eine mit wenigstens elektrischen Zuleitungen versehene Steckerbuchse derart angeordnet ist, daß die Steckerbuchse aus einer zurückgezogenen Ruhestellung in eine in die Einführöffnung ragende Konnektorstellung und umgekehrt verschiebbar ist.

In der ausgefahrenen Konnektorstellung kann die Steckerbuchse mit einem komplementär ausgebildeten Stecker zusammenwirken.

In einer bevorzugten Ausführungsform ist die Steckerbuchse am vorderen Ende eines Schiebeteils ausgebildet und an einer ortsfesten Halterung geführt. Zum Verfahren des Schiebeteils gegenüber der Halterung kann eine Antriebsvorrichtung, beispielsweise in Form eines Pneumatikzylinders oder elektromechanischen Antriebs, vorgesehen sein. Der mit Druckluft betriebene Zylinder ist besonders vorteilhaft, da er an der ohnehin vorhandenen Druckluftversorgung des Fahrzeuges angeschlossen sein kann.

Vorteilhafterweise ist die Steckerbuchse mit einer Abdeckung verschließbar. Hierdurch werden die Kontakte vor Verschmutzung, insbesondere durch Schmierfett, geschützt. In der zurückgezogenen Ruhestellung ist die Steckerbuchse somit vor Beschädigungen, insbesondere beim Einfahren des Königszapfens in die Sattelkupplung, geschützt.

Vorzugsweise wird die Abdeckung durch zwei greiferförmige Schaufeln gebildet, die bei einer Vorschubbewegung des Schiebeteils in die Konnektorstellung aufklappen und die Steckerbuchse freigeben. Nach dem Zurückfahren des Schiebeteils in die Ruhestellung verschließen die Schaufeln wieder selbsttätig die Steckerbuchse.

In einer besonderen Ausführungsform weist die Steckerbuchse am vorderen Ende Einführflächen auf, die vorzugsweise konisch zulaufend ausgebildet sind. Hierdurch wird das Einführen in einen Stecker erleichtert.

In einer günstigen Ausführungsform ist die Steckerbuchse senkrecht zur Verschieberichtung beweglich geführt. Dadurch können Toleranzen zwischen der Sattelkupplung und dem Königszapfen, die gegebenenfalls durch Verschleiß des Königszapfens und der Verriegelungsvorrichtung im Verlauf der Einsatzzeit der Sattelkupplung auftreten können, ausgeglichen werden.

Die erfindungsgemäße Steckvorrichtung, die in Kombination mit einer Sattelkupplung im Rahmen des Steckkupplungssystems Verwendung finden kann, weist einen in einem Tragelement angeordneten Stecker für ein eine Steckerbuchse aufweisendes Steckkupplungssystem zum Verbinden von Leitungen zwischen einem ersten und einem zweiten Fahrzeug auf, wobei das erste Fahrzeug ein Zugfahrzeug mit einer eine keilförmige Einführöffnung aufweisenden Sattelkupplung und das zweite Fahrzeug ein Auflieger mit einem Königszapfen ist.

Das Tragelement umfaßt einen Grundkörper zur Aufnahme des Steckers und Mittel zur schwenkbaren Anbringung des Tragelementes an dem zweiten Fahrzeug. Die bewegliche Anbringung des Tragelementes muß am Auflieger an einer Stelle vorgenommen werden, die beim Ankuppeln an das Zugfahrzeug ein Einführen in die Einführöffnung der Sattelkupplung ermöglicht. Dies ist vorzugsweise die Unterseite des Aufliegers im Bereich des Königszapfens oder auch direkt am Königszapfen.

Die Steckvorrichtung ist dadurch gekennzeichnet, daß der Grundkörper eine komplementär zu der Einführöffnung der Sattelkupplung ausgebildete Gestalt aufweist und der Stecker in einer seitlichen Flanke des Grundkörpers angeordnet ist.

Durch die auf die Gestalt der Einführöffnung der Sattelkupplung abgestimmte Form des Grundkörpers wird der in der Flanke des Grundkörpers angeordnete Stecker beim Ankuppeln in eine günstige Position gegenüber einer an der Einführöffnung angebrachten Steckerbuchse gebracht.

Vorteilhafterweise ist der Stecker ebenfalls mit einer Abdeckung verschließbar. Diese Abdeckung kann beispielsweise aus Gummilippen oder dergleichen bestehen.

In einer besonderen Ausgestaltung ist das Tragelement schwenkbar am Auflieger angeordnet, wobei der Schwenkwinkel des Tragelementes vorzugsweise mit einem Drehwinkelbegrenzer begrenzt ist. Zusätzlich kann das Tragelement mittels mindestens einer Rückstellfeder bei einem getrennten ersten und zweiten Fahrzeug in einer einfahrbereiten Stellung ausgerichtet sein. Mit Hilfe dieser Maßnahme soll vermieden werden, daß der Fahrer des Zugfahrzeuges beim Ankuppeln rückwärts auf ein gegen die Fahrtrichtung ausgerichtetes Tragelement fährt und dieses dadurch beschädigt.

Vorzugsweise ist der Grundkörper aus Kunststoff oder aus einem elastischen Material gefertigt. Hiermit wird Korrosion vermieden und der Grundkörper paßt sich optimal den Konturen der Einführöffnung der Sattelkupplung an.

In einer günstigen Ausführung ist das Tragelement mittels eines Bügels schwenkbar am Königszapfen angebracht. Aufgrund der formschlüssigen Gestaltung des Bügels gegenüber dem Verriegelungsbereich der Sattelkupplung kommt es beim Ankuppeln zu einer erheblichen Zugkraftbelastung des Bügels. Aus diesem Grund ist er vorteilhafterweise aus Metall gefertigt.

In einer besonderen Ausführungsform ist der Grundkörper des Tragelementes als Keil ausgebildet, dessen seitlichen Flanken in Richtung des Königszapfens zulaufen. Innerhalb des Keils kann ein Längsschlitz vorhanden sein und die Breite des Keils kann größer als der Einführbereich der Sattelkupplung ausgebildet sein. Hierdurch wird eine Federkraft in Richtung der Kupplungshörner aufgebracht und der Keil in dem Einführbereich fixiert.

Alternativ zu der keilförmigen Ausgestaltung des Grundkörpers kann der Grundkörper einen ersten und zweiten Steg aufweisen, wobei der erste Steg auf den Königszapfen zuläuft und der zweite Steg an dem königszapfenfernen Ende des ersten Stegs derart angreift, daß der zweite Steg bei gekuppelten Fahrzeugen an mindestens einer Stelle in der Einführöffnung mit der Sattelkupplung in Kontakt steht.

In einer weiteren alternativen Ausgestaltung ist das Tragelement an einer an der Unterseite des Aufliegers angeordneten Schiene verschiebbar gelagert und in Eingriff mit der Einführöffnung der Sattelkupplung bringbar. Diese Ausführungsform erfordert bauliche Maßnahmen am Auflieger und ermöglicht dafür das Weiterbenutzen eines konventionellen Königszapfens.

Königszapfen, die mit einer Sattelkupplung zusammenwirken, weisen in der Regel einen Montageteller und einen daran angreifenden zylindrischen Zapfen auf, wobei der Zapfen einen oberen und unteren durchmessergroßen Abschnitt und in seinem mittleren Bereich einen durchmesserkleinen Abschnitt zum Angreifen eines Verschlußriegels besitzt.

Der erfindungsgemäße Königszapfen, der im Rahmen des Steckkupplungssystems eingesetzt werden kann, ist dadurch gekennzeichnet, daß der obere durchmessergroße Abschnitt mit einer durchmesserreduzierten Ausnehmung und einem durchmessergroßen Kragen ausgebildet ist.

Im Bereich der durchmesserreduzierten Ausnehmung kann der Bügel des Tragelementes angreifen, so daß bei angepaßter Stärke des Bügels der Außendurchmesser des Königszapfens nicht vergrößert wird. Ein durchmessergroßer Kragen sichert den Bügel gegen Verschiebung in axialer Richtung des Königszapfens nach unten.

Vorzugsweise befindet sich der durchmessergroße Kragen unterhalb der durchmesserreduzierten Ausnehmung. Dies ermöglicht eine einfache bauliche Ausführung des Bügels. Denkbar ist jedoch auch ein Bügel mit einer Nut, die den durchmessergroßen Kragen in einem mittleren Bereich der durchmesserreduzierten Ausnehmung aufnimmt.

In einer vorteilhaften Ausgestaltung ist die durchmesserreduzierte Ausnehmung nach oben durch den Montageteller begrenzt. Hierdurch ist der Bügel nach oben ebenfalls formschlüssig fixiert. Der Montageteller dient gleichzeitig zur Befestigung des Königszapfens am Auflieger.

Vorteilhafterweise ist auf der durchmesserreduzierten Ausnehmung eine Buchse aufgebracht. Diese soll eine Drehbewegung des Königszapfens gegenüber dem Bügel unterstützen und kann hierzu zusätzlich eine Beschichtung oder Oberflächenbehandlung aufweisen.

Die Komponenten des Steckkupplungssystems, wie die einen Stecker aufweisende Steckvorrichtung, die Steckerbuchse, die Antriebsvorrichtung, das Datenerfassungs- und -auswertegerät sowie der erste und zweite Sensor können als Nachrüstsatz bereitgestellt werden. Bei der Verwendung des Steckkupplungssystems als Nachrüstsatz ist eine Anpassung der Komponenten erforderlich, wobei die Steckerbuchse vorzugsweise in einem unter der Sattelkupplungsplatte einer Sattelkupplung angeordneten Gehäuse untergebracht ist und wobei das Tragelement nach unten die Sattelkupplung überragt und auf Höhe der Steckerbuchse ein Stecker in dem Tragelement angeordnet ist.

Der konventionelle Königszapfen ist vorzugsweise durch einen im Kontaktbereich zum Tragelement mit einer durchmesserreduzierten Ausnehmung ausgebildeten Königszapfen austauschbar.

An der Sattelkupplung ist vorzugsweise der erste Sensor zur Sensierung eines Vorhandenseins des Tragelementes und ein zweiter Sensor zur Sensierung des Verriegelungszustandes anbringbar, wobei der erste und zweite Sensor mit dem an oder in der Sattelkupplung angeordneten Datenerfassungs- und -auswertegerät verbindbar ist.

Die Erfindung wird anhand der nachfolgenden Figuren beispielhaft näher erläutert. Es zeigen die
- Fig. 1: eine perspektivische Ansicht von Sattelkupplung, Königszapfen und Steckvorrichtung in abgekuppeltem Zustand;
- Fig. 2: eine Draufsicht auf einen Ausschnitt der Sattelkupplung mit Steckerbuchse in Ruhestellung;
- Fig. 3: eine Draufsicht auf einen Ausschnitt der Sattelkupplung mit Steckerbuchse in Konnektorstellung;
- Fig. 4: eine perspektivische Ansicht auf die Sattelkupplung, Königszapfen und Steckvorrichtung in angekuppeltem Zustand;
- Fig. 5: eine perspektivische Ansicht unter die Sattelkupplung mit eingeführter Steckvorrichtung und Sensor zur Sensierung der Kupplungspositionen der Steckvorrichtung;
- Fig. 6: eine Seitenansicht einer an einem Königszapfen angebrachten Steckvorrichtung;
- Fig. 7: eine Draufsicht einer an einem Königszapfen angebrachten Steckvorrichtung gemäß Fig. 6;
- Fig. 8: eine detaillierte perspektivische Darstellung von Steckerbuchse, Schiebeteil, Halterung und Abdeckung;
- Fig. 9: eine detaillierte perspektivische Ansicht des Steckers;
- Fig. 10: eine perspektivische Ansicht von Stecker und teilweise ausgefahrener Steckerbuchse bei geöffneter Abdeckung, und
- Fig. 11: eine Ansicht einer weiteren Ausführungsform einer Steckvorrichtung.

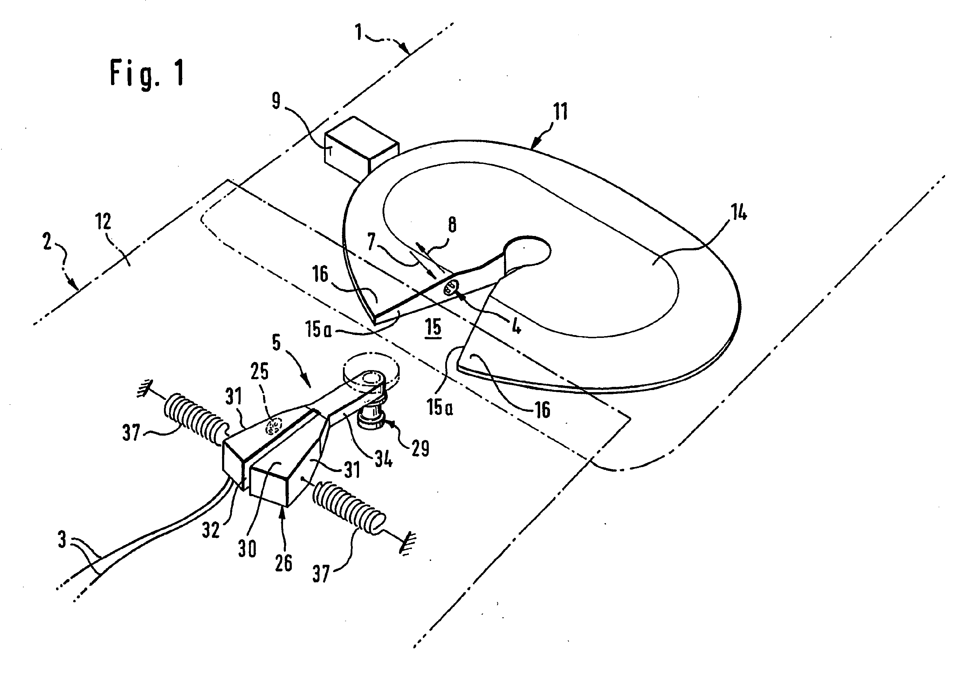

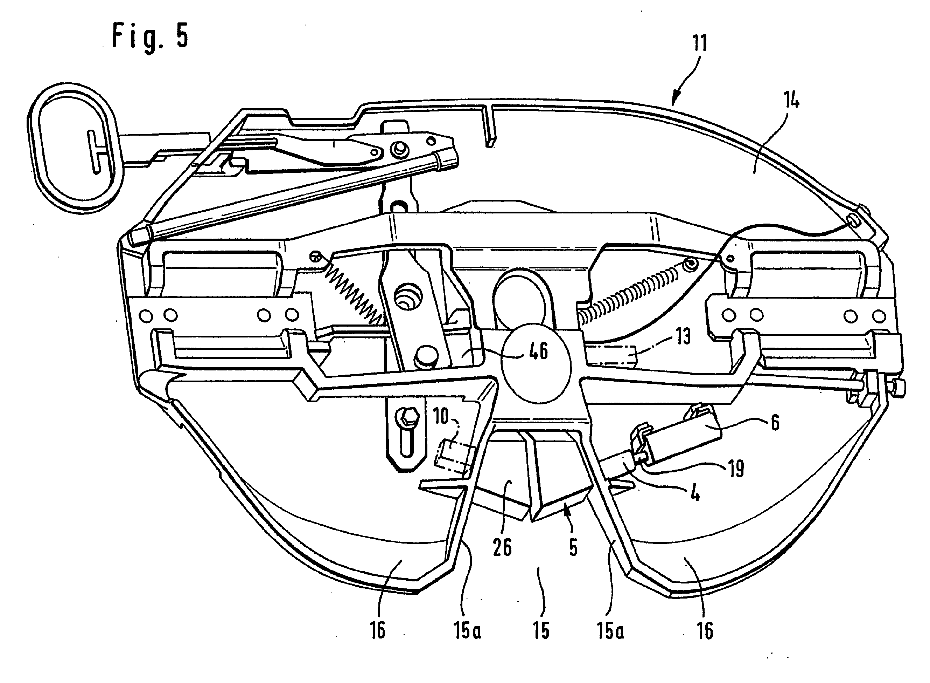

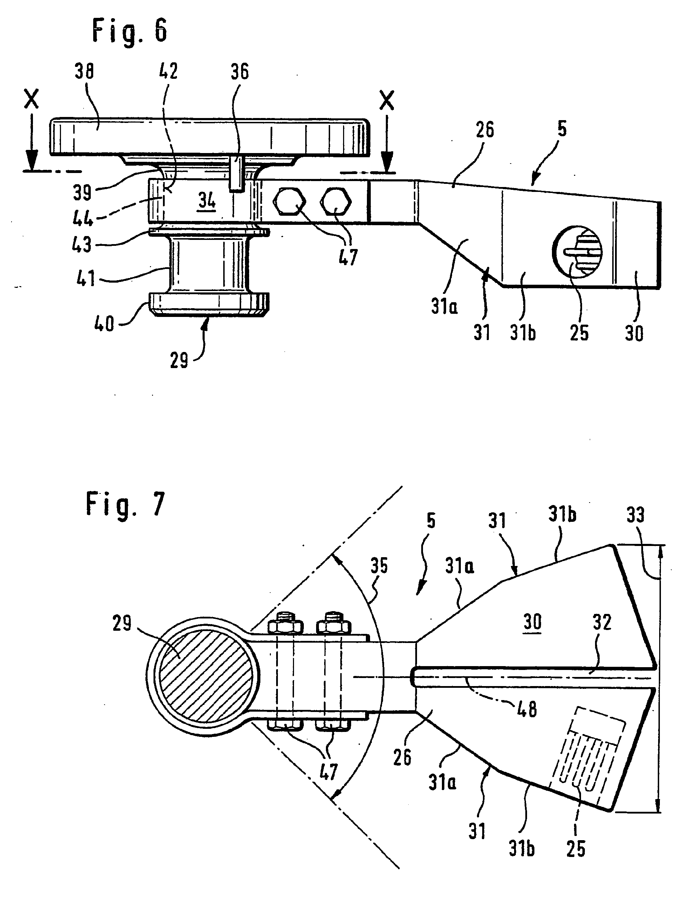

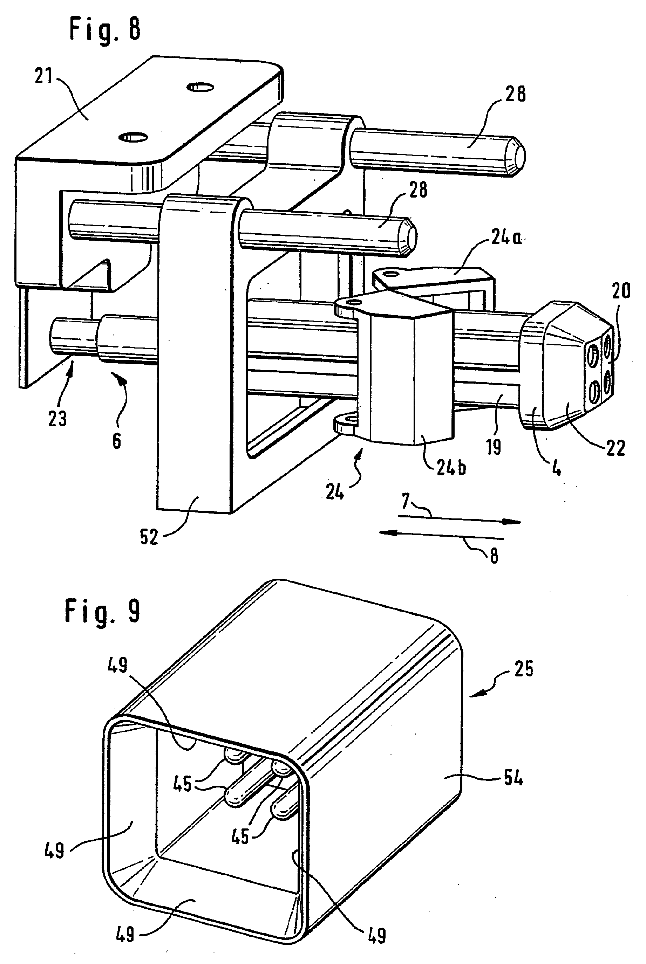

Die Fig. 1 zeigt eine perspektivische Ansicht auf eine am ersten Fahrzeug 1 angebrachte Sattelkupplung 11 mit einer Sattelkupplungsplatte 14, einem Königszapfen 29 und einer Steckvorrichtung 5. Die Einführöffnung 15 der Sattelkupplung 11 wird beidseitig durch die Kupplungshörner 16 begrenzt. In der Seitenwand 15a der Sattelkupplungsplatte ist eine verschiebbare Steckerbuchse 4 zu erkennen. In dem in der Fig. 1 dargestellten abgekuppelten Zustand von erstem und zweiten Fahrzeug 1,2 befindet sich die Steckerbuchse 4 in einer eingefahrenen Ruhestellung 17, bei der das vordere Ende 20 der Steckerbuchse 4 (s. Fig. 6 und Fig. 8) mit der Seitenwand 15a der Sattelkupplungsplatte abschließt. Seitlich neben der Sattelkupplung 11 befindet sich das Datenerfassungs- und -auswertegerät 9. Das Datenerfassungs- und -auswertegerät 9 ist mit dem ersten Sensor 10, dem zweiten Sensor 13 und der Antriebsvorrichtung 6, die in Fig. 5 gezeigt sind, verbunden.

Im Bereich der Einführöffnung 15 ist der Königszapfen 29 mit der daran drehbar gelagerten Steckvorrichtung 5 dargestellt. Die Steckvorrichtung 5 umfaßt das als Keil 30 ausgebildete Tragelement 26 mit den beiden seitlichen Flanken 31 und dem Längsschlitz 32, der bei einem in die Sattelkupplung eingeführten Königszapfen eine Verformung des Tragelementes ermöglicht und dabei über die Flanken 31 eine Federkraft auf die Seitenwände 15a der Sattelkupplungsplatte ausübt. In der linken Seitenwand 15a ist die Steckerbuchse 4 angeordnet, die nach einer Verschiebung in Richtung Konnektorstellung 18 mit dem Stecker 25 zusammenwirkt. Ebenfalls an den seitlichen Flanken 31 des Keils 30 greifen beidseitig die Rückstellfedern 37 an. Mit Hilfe der Rückstellfedern 37 wird die Steckvorrichtung 5 in abgekuppeltem Zustand, wie in Fig. 1 dargestellt, ausgerichtet. An der Unterseite des Keils 30 sind die Leitungen 3 des zweiten Fahrzeugs 2, 12 angeschlossen. Die Länge der Leitungen 3 sind derart bemessen, daß sie auch bei enger Kurvenfahrt nicht aus dem Keil 30 gerissen werden.

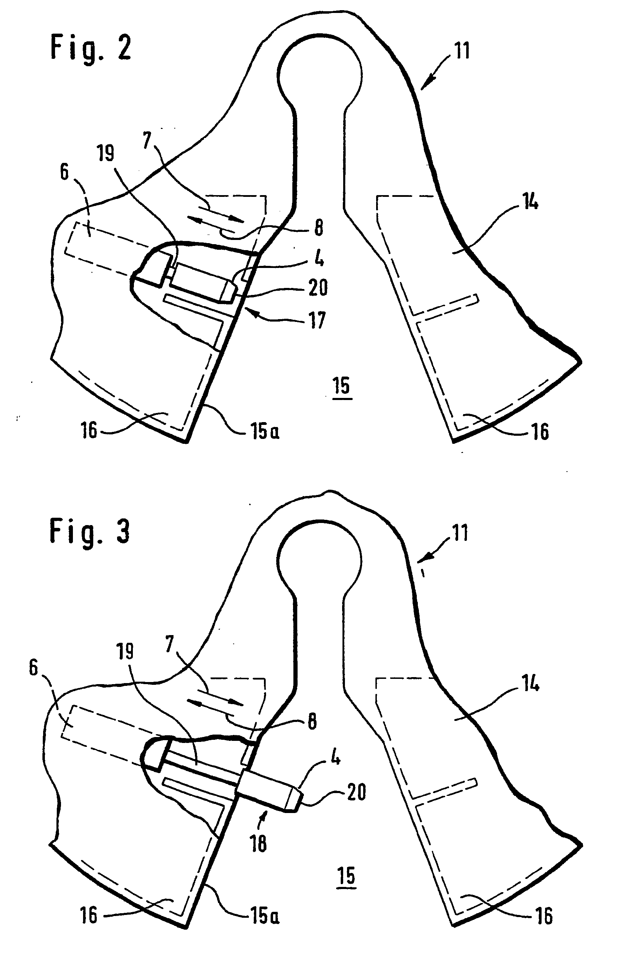

Die Fig. 2 zeigt die Steckerbuchse 4 in Ruhestellung 17. Das Schiebeteil 19 befindet sich unterhalb der Antriebsvorrichtung 6 und wird durch diese verdeckt. Das vordere Ende 20 der Steckerbuchse 4 ist beabstandet zur Seitenwand 15a der Einführöffnung 15. Die Längsachse der Steckerbuchse 4 steht senkrecht auf der Fläche der Seitenwand 15a. In dieser Ruhestellung 17 ist die Sattelkupplung 11 zur Aufnahme des Königszapfens 29 bereit (nicht eingezeichnet).

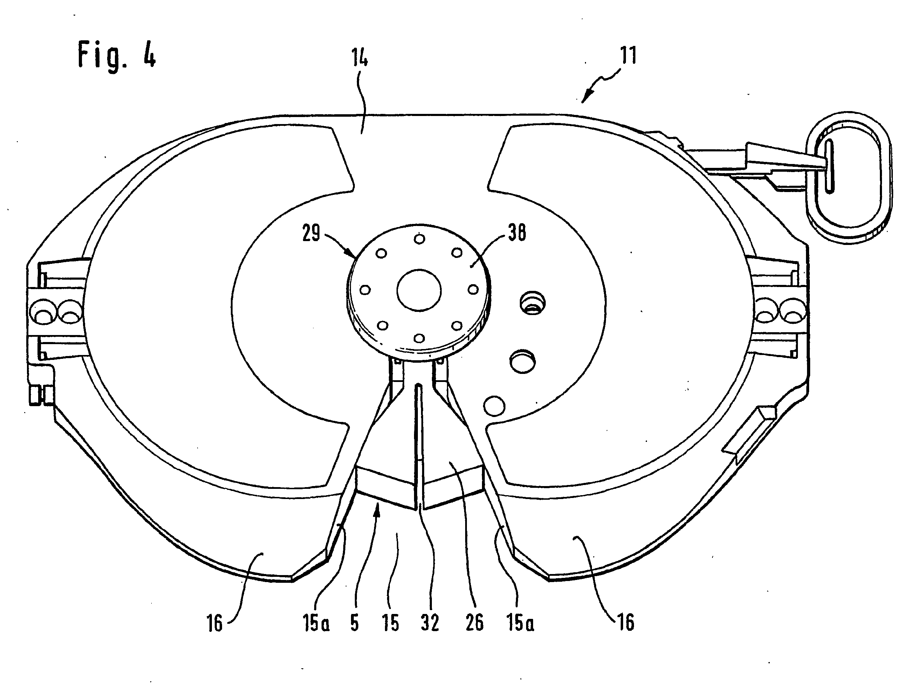

Die Fig. 3 stellt die Konnektorstellung 18 ohne Steckvorrichtung 5 des zweiten Fahrzeugs 2,12 dar. Die Antriebsvorrichtung 6 hat das Schiebeteil 19 vollständig in Verschiebungsrichtung 7 ausgefahren, so daß das vordere Ende 20 der Steckerbuchse 4 in die Einführöffnung 15 ragt.
Eine perspektivische Ansicht auf die Sattelkupplung 11, den Königszapfen 29 und die Steckvorrichtung 5 in angekuppeltem Zustand zeigt die Fig. 4. Der Königszapfen 29 wird in dieser Ansicht durch den Montageteller 38 verdeckt. An den Königszapfen 29 greift die Steckvorrichtung 5 an, deren Tragelement 26 in den Einführbereich 15 der Sattelkupplung 11 ragt und sich dabei mit seinen seitlichen Flanken 31 an der Seitenwand 15a der Einführöffnung 15 abstützt.

Die Fig. 5 verdeutlicht durch eine perspektivische Ansicht unter die Sattelkupplung 11 die Anordnung des ersten und zweiten Sensors 10,13, der Antriebsvorrichtung 6 und der in Ruhestellung 17 befindlichen Steckerbuchse 4 bei in der Einführöffnung 15 eingebrachtem Tragelement 26. In der Fig. 5 ist der erste Sensor 10 zur Sensierung der Kupplungsposition der Steckvorrichtung 5 in der Seitenwand 15a der Einführöffnung 15, gegenüberliegend der Steckerbuchse 4, auf der Unterseite der Sattelkupplungsplatte 14 untergebracht. Der zweite Sensor 13 sensiert die Stellung des Verschlußriegels 46 ebenfalls auf der Unterseite der Sattelkupplungsplatte 14.

In der Fig. 6 ist der Königszapfen 29 mit einer daran befestigten Steckvorrichtung 5 in einer Seitenansicht dargestellt. Das Tragelement 26 mit dem daran angeordneten Stecker 25 ist mittels Befestigungsschrauben 47 an dem Bügel 34 befestigt.

Der Königszapfen 29 umfaßt einen oberen und einen unteren durchmessergroßen Abschnitt 39,40 sowie einen durchmesserkleinen Abschnitt 41, der mit dem Verschlußriegel 46 (s. Fig. 5) zusammenwirkt. Der obere durchmessergroße Abschnitt 39 weist eine durchmesserreduzierte Ausnehmung 42 auf, an der der Bügel 34 angreift. Zur Verbesserung der Gleiteigenschaften und Minimierung des Verschleisses ist zwischen Bügel 34 und durchmesserreduzierter Ausnehmung 42 eine Buchse 44 angebracht. Nach unten werden sowohl die Buchse 44 als auch der Bügel 34 durch den durchmessergroßen Kragen 43 fixiert. Der Königszapfen 29 wird mittels des Montagetellers 38 am Auflieger 12 befestigt.

Der Schwenkwinkel 35 (s. Fig. 7) der Steckvorrichtung 5 wird durch den an dem Montageteller 38 befestigten Drehwinkelbegrenzer 36 eingeschränkt.

Die Fig. 7 zeigt eine Draufsicht auf den Königszapfen 29 und die Steckvorrichtung 5 entlang einer Schnittlinie X in Fig. 6. Die Steckvorrichtung 5 ist als Keil 30 ausgebildet. In der Draufsicht ist die Breite 33 des Keils 30 und der in Längsrichtung des Keils 30 verlaufende Schlitz 32 zu erkennen. Die Breite 33 des Keils 30 ist geringfügig größer als die Breite der Einführöffnung 15 der Sattelkupplung 11. Die seitlichen Flanken 31 des Keils 30 umfassen an dem königszapfenfernen Ende eine flach zulaufende Flanke 31b, der sich in Richtung des Königszapfens eine steil zulaufende Flanke 31a anschließt. Bei einem Ankuppeln des Aufliegers 12 an ein erstes Fahrzeug 1 üben die Seitenwände 15a der Sattelkupplung 11 auf die seitlichen Flanken 31b eine Kraftkomponente senkrecht zur Längsachse 48 des Keils 30 aus. Aufgrund des verformbaren Materials des Keils 30 verengt sich der Längsschlitz 32 im Keil 30 und die Breite 33 des Keils verringert sich. Aufgrund des verwendeten flexiblen Materials des Keils 30 üben die Flanken 31b in angekuppeltem Zustand eine Rückstellkraft in Richtung der Seitenwände 15a der Einführöffnung 15 aus, wodurch sich der Keil 30 zentriert in der Einführöffnung 15 ausrichtet und die seitlichen Flanken 31b des Keils 30 vollflächig an den Seitenwänden 15a der Einführöffnung 15 anliegen.

Die Fig. 8 zeigt eine detaillierte perspektivische Ansicht von Steckerbuchse 4, Führungsrahmen 52, Schiebeteil 19, Halterung 21 und Abdeckung 24. Die Halterung 21 ist ortsfest unterhalb der Sattelkupplungsplatte 14 angebracht und weist zwei zylindrische Führungen 28 auf, senkrecht ausgerichtet zur Seitenwand 15a der Einführöffnung (nicht eingezeichnet). An den Führungen 28 ist der Führungsrahmen 52, angetrieben von einem sich ebenfalls an der Halterung 21 abstützenden Pneumatikzylinder 23, verschiebbar gelagert. Der Führungsrahmen 52 ist in seinem mittleren Bereich starr mit dem Schiebeteil 19, welches parallel zu den Führungen 28 ausgerichtet ist, verbunden. An dem vorderen Ende 20 des in Fig. 8 teilweise ausgefahrenen Schiebeteils 19 befindet sich die Steckerbuchse 4 mit in der Stirnfläche angeordneten Anschlüssen, welche die Abdeckung 24, die aus zwei schwenkbar gelagerten Schaufeln 24a,24b besteht, aufgestoßen hat. Die zwei schwenkbar gelagerten Schaufeln 24a,24b sind ortsfest angebracht (nicht dargestellt). Die Verschiebung der Steckerbuchse 4 in Richtung Konnektorstellung 18 bzw. Ruhestellung 17 ist in der Fig. 8 durch zwei Pfeile 7,8 angezeigt. Die Steckerbuchse 4 weist konisch zulaufende Einführflächen 22 auf.

Die Fig. 9 zeigt eine detaillierte perspektivische Ansicht des Steckers 25 mit einem im wesentlichen quadratischen Steckergehäuse 54, in dem sich vier Kontaktstifte 45 befinden. Im polseitigen Randbereich des Steckers 25 sind insgesamt vier schräge Einführflächen 49 des Steckers 25 zu erkennen, die das Verbinden von Steckerbuchse 4 und Stecker 25 erleichtern sollen.

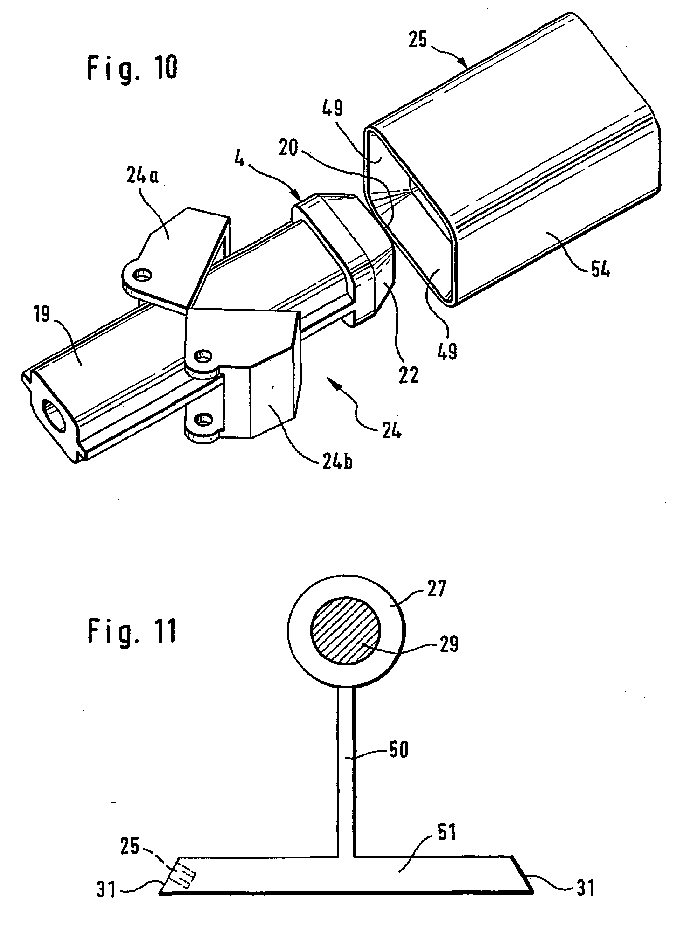

In Fig. 10 ist eine perspektivische Ansicht des Steckers 25 und eine teilweise ausgefahrene Steckerbuchse 4 bei geöffneter Abdeckung 24 zu erkennen. Sowohl auf der Seite des Schiebeteils 19 als auf der Seite des Steckers 25 sind komplementär ausgebildete Einführflächen 22,49 vorhanden, die ein Ankuppeln der Steckerbuchse 4 in den Stecker 25 auch bei größeren Toleranzen ermöglicht.

In der Fig. 11 ist eine weitere Ausführungsform des Tragelementes dargestellt, das einen ersten Steg 50 und einen zweiten Steg 51 aufweist, in dem der Stecker 25 angeordnet ist. Der erste Steg 50 ist an seinem einen Ende mit einem Ring 27 zur schwenkbaren Anbringung an dem Königszapfen 29 ausgebildet. An dem anderen, königszapfenfernen Ende des ersten Stegs 50 erstreckt sich rechtwinklig der zweite Steg 51, wobei an dem Endbereich des zweiten Stegs 51 der Stecker 25 derart angeordnet ist, daß er mit der an der Sattelkupplung 11 angebrachten Steckerbuchse 4 zusammenwirken kann.

### Bezugszeichen

- 1: erstes Fahrzeug
- 2: zweites Fahrzeug
- 3: Leitungen
- 4: Steckerbuchse
- 5: Steckvorrichtung
- 6: Antriebsvorrichtung
- 7: verschieberichtung der Steckerbuchse Konnektorstellung
- 8: Verschieberichtung der Steckerbuchse Ruhestellung
- 9: Datenerfassungs- und -auswertegerät
- 10: erster Sensor
- 11: Sattelkupplung
- 12: Auflieger
- 13: zweiter Sensor
- 14: Sattelkupplungsplatte
- 15: Einführöffnung
- 15a: Seitenwand Einführöffnung
- 16: Kupplungshörner
- 17: Ruhestellung
- 18: Konnektorstellung
- 19: Schiebeteil
- 20: vorderes Ende der Steckerbuchse
- 21: Halterung
- 22: Einführflächen
- 23: Pneumatikzylinder
- 24: Abdeckung Steckerbuchse
- 24a: Schaufel
- 24b: Schaufel
- 25: Stecker
- 26: Tragelement
- 27: Mittel zur beweglichen Anbringung
- 28: Führungen
- 29: Königszapfen
- 30: Keil
- 31: seitliche Flanken des Keils
- 31a: steil zulaufende Flanke
- 31b: flach zulaufende Flanke
- 32: Längsschlitz im Keil
- 33: Keilbreite
- 34: Bügel
- 35: Schwenkwinkel
- 36: Drehwinkelbegrenzer
- 37: Rückstellfeder
- 38: Montageteller
- 39: oberer durchmessergroßer Abschnitt
- 40: unterer durchmessergroßer Abschnitt
- 41: durchmesserkleiner Abschnitt
- 42: durchmesserreduzierte Ausnehmung
- 43: durchmessergroßer Kragen
- 44: Buchse
- 45: Kontaktstifte
- 46: Verschlußriegel
- 47: Befestigungsschrauben
- 48: Längsachse Keil
- 49: Einführflächen Stecker
- 50: erster Steg
- 51: zweiter Steg
- 52: Führungsrahmen
- 53: Anschlüsse
- 54: Steckergehäuse

## Patentansprüche

1. Sattelkupplung (11) mit einer Sattelkupplungsplatte (14), die zwei eine Einführöffnung (15) begrenzende Kupplungshömer (16) aufweist, **dadurch gekennzeichnet,**
**dass** im Bereich der Einführöffnung (15) an oder in einem der beiden Kupplungshömer (16) eine mit wenigstens elektrischen Zuleitungen versehene Steckerbuchse (4) derart angeordnet ist, dass die Steckerbuchse (4) aus einer zurückgezogenen Ruhestellung (17) in eine in die Einführöffnung (15) ragende Konnektorstellung (18) und umgekehrt verschiebbar ist.

2. Sattelkupplung nach Anspruch 1, **dadurch gekennzeichnet, dass** die Steckerbuchse (4) am vorderen Ende (20) eines Schiebeteils (19) ausgebildet ist.

3. Sattelkupplung nach Anspruch 2, **dadurch gekennzeichnet, dass** das Schiebeteil (19) an einer ortsfesten Halterung (21) geführt ist.

4. Sattelkupplung nach Anspruch 2 oder 3, **dadurch gekennzeichnet, dass** das Schiebeteil (19) gegenüber der Halterung (21) mittels einer Antriebsvorrichtung (6) verfahrbar ist.

5. Sattelkupplung nach Anspruch 4, **dadurch gekennzeichnet, dass** die Antriebsvorrichtung (6) einen Pneumatikzylinder (23) umfasst.

6. Sattelkupplung nach Anspruch 4, **dadurch gekennzeichnet, dass** die Antriebsvorrichtung (6) einen elektromechanischen Antrieb umfasst.

7. Sattelkupplung nach einem der Ansprüche 1 bis 6, **dadurch gekennzeichnet, dass** die Steckerbuchse (4) mit einer Abdeckung (24) verschließbar ist.

8. Sattelkupplung nach Anspruch 7, **dadurch gekennzeichnet, dass** die Abdeckung (24) zwei greiferförmige Schaufeln umfasst, die bei einer Vorschubbewegung des Schiebeteils (19) in Konnektorstellung (18) die Steckerbuchse (4) freigeben.

9. Sattelkupplung nach einem der Ansprüche 1 bis 8, **dadurch gekennzeichnet, dass** die Steckerbuchse (4) am vorderen Ende (20) Einführflächen (22) aufweist.

10. Sattelkupplung nach Anspruch 9, **dadurch gekennzeichnet, dass** die Einführflächen (22) konisch zulaufend ausgebildet sind.

11. Sattelkupplung nach einem der Ansprüche 1 bis 11, **dadurch gekennzeichnet, dass** die Steckerbuchse (4) senkrecht zur Verschieberichtung (7,8) beweglich geführt ist.

12. Kombination einer Sattelkupplung und einer Steckvorrichtung (5), wobei die Steckvorrichtung (5) einen in einem Tragelement (26) angeordneten Stecker (25) für ein eine Steckerbuchse (4) aufweisendes Steckkupplungssystem zum Verbinden von Leitungen (3) zwischen einem ersten und einem zweiten Fahrzeug (1,2) aufweist, wobei das erste Fahrzeug (1) ein Zugfahrzeug mit einer eine keilförmige Einführöffnung (15) aufweisenden Sattelkupplung (11) und das zweite Fahrzeug (2) ein Auflieger mit einem Königszapfen (29) ist, und das Tragelement (26) einen Grundkörper zur Aufnahme des Steckers (25) und Mittel zur schwenkbaren Anbringung des Tragelementes (26) an dem zweiten Fahrzeug (2) umfasst,
**dadurch gekennzeichnet,**
**dass** die Einführöffnung (15) durch zwei Kupplungshörner (16) begrenzt ist und an oder in einem der beiden Kupplungshörner (16) eine mit wenigstens elektrischen Zuleitungen versehene Steckerbuchse (4) derart angeordnet ist, dass die Steckerbuchse (4) aus einer zurückgezogenen Ruhestellung (17) in eine in die Einführöffnung (15) ragende Konnektorstellung (18) und umgekehrt verschiebbar ist, und
**dass** der Grundkörper eine komplementär zu der keilförmigen Einführöffnung (15) der Sattelkupplung (11) ausgebildete Gestalt aufweist und der Stecker (25) in einer seitlichen Flanke (31) des Grundkörpers angeordnet ist.

13. Kombination nach Anspruch 12, **dadurch gekennzeichnet, dass** der Stecker (25) mit einer Abdeckung verschließbar ist.

14. Kombination nach Anspruch 12 oder 13, **dadurch gekennzeichnet, dass** das Tragelement (26) schwenkbar am Auflieger angeordnet ist, wobei der Schwenkwinkel (35) des Tragelementes (26) mit einem Drehwinkelbegrenzer (36) begrenzt ist.

15. Kombination nach einem der Ansprüche 12 bis 14, **dadurch gekennzeichnet, dass** das Tragelement (26) mittels mindestens einer Rückstellfeder (37) bei einem getrennten ersten und zweiten Fahrzeug (1,2) in einer einfahrbereiten Stellung ausgerichtet ist.

16. Kombination nach einem der Ansprüche 12 bis 15, **dadurch gekennzeichnet, dass** der Grundkörper aus Kunststoff gefertigt ist.

17. Kombination nach Anspruch 16, **dadurch gekennzeichnet, dass** der Grundkörper aus einem elastischen Material gefertigt ist.

18. Kombination nach einem der Ansprüche 12 bis 17, **dadurch gekennzeichnet, dass** das Mittel zur schwenkbaren Anbringung des Tragelementes (26) an dem Königszapfen (29) einen Bügel (34) umfasst.

19. Kombination nach Anspruch 18, **dadurch gekennzeichnet, dass** der Bügel (34) aus Metall gefertigt ist.

20. Kombination nach einem der Ansprüche 12 bis 19, **dadurch gekennzeichnet, dass** der Grundkörper des Tragelementes (26) als Keil (30) ausgebildet ist, dessen seitliche Flanken (31) in Richtung des Königszapfens (29) zulaufen.

21. Kombination nach Anspruch 20, **dadurch gekennzeichnet, dass** der Keil (30) mindestens einen Längsschlitz aufweist.

22. Kombination nach Anspruch 21, **dadurch gekennzeichnet, dass** die Breite des Keils (33) größer als die Einführöffnung (15) der Sattelkupplung (11) ausgebildet ist.

23. Kombination nach einem der Ansprüche 12 bis 19, **dadurch gekennzeichnet, dass** der Grundkörper einen ersten und einen zweiten Steg (50,51) aufweist, wobei der erste Steg (50) auf den Königszapfen (29) und der zweite Steg (51) an dem königszapfenfernen Ende des ersten Stegs (50) derart angeordnet ist, dass der zweite Steg (51) bei gekuppelten Fahrzeugen an mindestens einer Stelle in der Einführöffnung (15) mit der Sattelkupplung (11) in Kontakt steht.

24. Kombination nach einem der Ansprüche 12 bis 23, wobei der Königszapfen (29) zum Zusammenwirken mit einer Sattelkupplung (11) einen Montageteller (38) und einen daran angreifenden zylindrischen Zapfen umfasst, wobei der Zapfen einen oberen und unteren durchmessergroßen Abschnitt (39,40) und in seinem mittleren Bereich einen durchmesserkleinen Abschnitt (41) zum Angreifen eines Verschlussriegels (46) aufweist, **dadurch gekennzeichnet, dass** der obere durchmessergroße Abschnitt (39) mit einer durchmesserreduzierten Ausnehmung (42) und einem durchmessergroßen Kragen (43) ausgebildet ist.

25. Kombination nach Anspruch 24, **dadurch gekennzeichnet, dass** die durchmesserreduzierte Ausnehmung (42) nach oben durch den Montageteller (38) begrenzt ist.

26. Kombination nach Anspruch 24 oder 25, **dadurch gekennzeichnet, dass** die durchmesserreduzierte Ausnehmung (42) nach unten durch den durchmessergroßen Kragen (43) begrenzt ist.

27. Kombination nach einem der Ansprüche 24 bis 26, **dadurch gekennzeichnet, dass** auf der durchmesserreduzierten Ausnehmung (42) eine Buchse (44) aufgebracht ist.

28. Kombination nach einem der Ansprüche 12 bis 17 oder 20 bis 23, **dadurch gekennzeichnet, dass** das Tragelement (26) an einer an der Unterseite des Aufliegers (12) angeordneten Schiene verschiebbar gelagert und in Eingriff mit der Einführöffnung (15) der Sattelkupplung (11) bringbar ist.

29. Kombination nach Anspruch 12, **dadurch gekennzeichnet, dass** an dem ersten Fahrzeug (1) ein Datenerfassungs- und - auswertegerät (9) angeordnet ist, das einerseits mit einer Antriebsvorrichtung (6) und andererseits mit einem am ersten Fahrzeug (1) angeordneten ersten Sensor (10) zur Sensierung der Kupplungsposition der Steckvorrichtung (5) verbunden ist.

30. Kombination nach Anspruch 29, **dadurch gekennzeichnet, dass** der erste Sensor (10) im Bereich der Einführöffnung (15) der Sattelkupplung (11) angeordnet ist.

31. Kombination nach Anspruch 29 oder 30, **dadurch gekennzeichnet, dass** das Datenerfassungs- und - auswertegerät (9) mit einem zweiten Sensor (13) zur Sensierung des Verriegelungszustandes der Sattelkupplung (11) verbunden ist.

32. Kombination nach einem der Ansprüche 29 bis 31, **dadurch gekennzeichnet, dass** das Datenerfassungs- und - auswertegerät (9) nur dann ein Freigabesignal an die Antriebsvorrichtung (6) zum Ausfahren der Steckerbuchse (4) abgibt, wenn mindestens einer der beiden Sensoren (10, 13) ein Freigabesignal an die Datenerfassungs- und -auswerteeinheit (9) abgibt.

33. Kombination nach einem der Ansprüche 29 bis 32, **dadurch gekennzeichnet, dass** die Steckerbuchse (4) und der Stecker (25) jeweils vierpolig ausgelegt sind.

## Claims

1. Fifth wheel (11) having a fifth wheel plate (14) which has two coupling horns (16) defining an insertion opening (15),
**characterised In**
**that**, in the region of the insertion opening (15) and on or In one of the two coupling horns (16), a plug socket (4) provided with at least electrical supply lines is arranged in such a manner that the plug socket (4) can be displaced from a retracted resting position (17) into a connector position (18) projecting into the insertion opening (15) and *vice versa.*

2. Fifth wheel according to claim 1, **characterised in that** the plug socket (4) Is formed at the forward end (20) of a pushing element (19).

3. Fifth wheel according to claim 2, **characterised in that** the pushing element (19) is guided on a fixed mounting (21).

4. Fifth wheel according to claim 2 or 3, **characterised in that** the pushing element (19) is displaceable relative to the mounting (21) by means of a drive device (6).

5. Fifth wheel according to claim 4, **characterised in that** the drive device (6) includes a pneumatic cylinder (23).

6. Fifth wheel according to claim 4, **characterised in that** the drive device (6) includes an electromechanical drive.

7. Fifth wheel according to any one of claims 1 to 6, **characterised in that** the plug socket (4) is closable by a cover (24).

8. Fifth wheel according to claim 7, **characterised in that** the cover (24) includes two clamshell-shaped scoops which uncover the plug socket (4) upon forward movement of the pushing element (19) into connector position (18).

9. Fifth wheel according to any one of claims 1 to 8, **characterised in that** the plug socket (4) has insertion faces (22) at the forward end (20).

10. Fifth wheel according to claim 9, **characterised in that** the insertion faces (22) taper.

11. Fifth wheel according to any one of claims 1 to 11, **characterised i**n that the plug socket (4) is guided to be movable perpendicular to the displacement direction (7, 8).

12. Combination of a fifth wheel and a plug-type device (5), wherein the plug-type device (5) has a plug (25), disposed in a support element (26), for a plug-type coupling system having a plug socket (4) for the connection of lines (3) between a first and a second vehicle (1, 2), wherein the first vehicle (1) is a towing vehicle with a fifth wheel (11) having a wedge-shaped Insertion opening (15) and the second vehicle (2) is a semi-trailer with a king pin (29), and the support element (26) includes a basic body for receiving the plug (25) and means for pivotally attaching the support element (26) to the second vehicle (2),
**characterised in**
**that** the insertion opening (15) is defined by two coupling horns (16) and a plug socket (4) provided with at least electrical supply lines is arranged on or in one of the two coupling horns (16) In such a manner that the plug socket (4) is displaceable from a retracted resting position (17) into a connector position (18) projecting into the Insertion opening (15) and *vice versa,* and
**that** the basic body has a shape complementary to the wedge-shaped insertion opening (15) of the fifth wheel (11) and the plug (25) is disposed in a lateral flank (31) of the basic body.

13. Combination according to claim 12, **characterised i**n that the plug (25) is closable by a cover.

14. Combination according to claim 12 or 13, **characterised in that** the support element (26) is pivotally arranged on the semi-trailer, wherein the pivoting angle (35) of the support element (26) is limited by a rotation angle limiter (36).

15. Combination according to any one of claims 12 to 14, **characterised in that** the support element (26) is oriented in a ready-for-insertion position by means of at least one return spring in the case of a separated first and second vehicle (1, 2).

16. Combination according to any one of claims 12 to 15, **characterised in that** the basic body Is made of plastics material.

17. Combination according to claim 16, **characterised i**n that the basic body is made of an elastic material.

18. Combination according to any one of claims 12 to 17, **characterised in that** the means for pivotally attaching the support element (26) to the king pin (29) include a shackle (34).

19. Combination according to claim 18, **characterised in that** the shackle (34) is made of metal.

20. Combination according to any one of claims 12 to 19, **characterised in that** the basic body of the support element (26) is constructed as a wedge (30) whose lateral flanks (31) converge in the direction of the king pin (29).

21. Combination according to claim 20, **characterised in that** the wedge (30) has at least one longitudinal slot.

22. Combination according to claim 21, **characterised in that** the width of the wedge (33) is greater than the insertion opening (15) of the fifth wheel (11).

23. Combination according to any one of claims 12 to 19, **characterised in that** the basic body has a first and a second bar (50, 51), wherein the first bar (50) is disposed on the king pin (29) and the second bar (51) is disposed at the end of the first bar (50) remote from the king pin in such a manner that, in coupled vehicles, the second bar (51) is in contact with the fifth wheel (11) at at least one point in the insertion opening (15).

24. Combination according to any one of claims 12 to 23, wherein the king pin (29) has, for cooperating with a fifth wheel (11), an assembly plate (38) and cylindrical pin acting on the latter, wherein the pin has an upper and a lower large-diameter portion (39, 40) and, in its middle region, a small-diameter portion (41) for being acted upon by a locking latch (46), **characterised in that** the upper large-diameter portion (39) is constructed to have a reduced-diameter recess (42) and a large-diameter collar (43).

25. Combination according to claim 24, **characterised i**n that the reduced-diameter recess (42) Is upwardly defined by the assembly plate (38).

26. Combination according to claim 24 or 25, **characterised in that** the reduced-diameter recess (42) Is downwardly defined by the large-diameter collar (43).

27. Combination according to any one of claims 24 to 26, **characterised in that** a bushing (44) is arranged on the reduced-diameter recess (42).

28. Combination according to any one of claims 12 to 17 or 20 to 23, **characterised in that** the support element (26) is displaceably supported on a rail disposed on the underside of the semi-trailer (12) and can be brought into engagement with the insertion opening (15) of the fifth wheel (11).

29. Combination according to claim 12, **characterised i**n that there is disposed on the first vehicle (1) a data gathering and evaluation device (9) which is connected on the one hand to a drive device (6) and on the other hand to a first sensor (10), disposed on the first vehicle (1), for sensing the coupling position of the plug-type device (5).

30. Combination according to claim 29, **characterised in that** the first sensor (10) is disposed in the region of the insertion opening (15) of the fifth wheel (11).

31. Combination according to claim 29 or 30, **characterised i**n that the data gathering and evaluation device (9) is connected to a second sensor (13) for sensing the locking state of the fifth wheel (11).

32. Combination according to any one of claims 29 to 31, **characterised in that** the data gathering and evaluation device (9) sends an enable signal to the drive device (6) to deploy the plug socket (4) only when at least one of the two sensors (10, 13) sends an enable signal to the data gathering and evaluation unit (9).

33. Combination according to any one of claims 29 to 32, **characterised in that** the plug socket (4) and the plug (25) are each of a four-pole configuration.

## Revendications

1. Sellette de couplage (11) avec une plaque de sellette d'attelage (14), comportant deux bras d'attelage (16) délimitant un orifice d'introduction (15), **caractérisée en ce que** dans la zone de l'orifice d'introduction (15) ou dans l'un des bras d'attelage, (16) une douille enfichable (4) au moins munie de conduits d'alimentation électrique est disposée de façon telle, que la douille enfichable (4) soit déplaçable d'une position de repos (17) retirée dans une position de connexion (18) faisant saillie dans l'orifice d'introduction (15) et inversement.

2. Sellette de couplage selon la revendication 1, **caractérisée en ce que** la douille enfichable (4) est prévue sur l'extrémité antérieure (20) d'un élément coulissant (19).

3. Sellette de couplage selon la revendication 2, **caractérisée en ce que** l'élément coulissant (19) est guidé sur une attache stationnaire (21).

4. Sellette de couplage selon la revendication 2 ou 3, **caractérisée en ce que** l'élément coulissant (19) est déplaçable par rapport à l'attache (21) au moyen d'un dispositif d'entraînement (6).

5. Sellette de couplage selon la revendication 4, **caractérisée en ce que** le dispositif d'entraînement (6) comprend un vérin pneumatique (23).

6. Sellette de couplage selon la revendication 4, **caractérisée en ce que** le dispositif d'entraînement (6) comprend un entraînement électromécanique.

7. Sellette de couplage selon l'une quelconque des revendications 1 à 6, **caractérisée en ce que** la douille enfichable (4) peut se fermer avec un couvercle (24).

8. Sellette de couplage selon la revendication 7, **caractérisée en ce que** le couvercle (24) comprend deux aubes en forme de grappins, qui lors d'un déplacement d'avance de l'élément coulissant (19) libèrent la douille enfichable (4) en position de connexion (18).

9. Sellette de couplage selon l'une quelconque des revendications 1 à 8, **caractérisée en ce que** la douille enfichable (4) comporte des surfaces d'introduction (22) sur l'extrémité antérieure (20).

10. Sellette de couplage selon la revendication 9, **caractérisée en ce que** les surfaces d'introduction (22) sont conçues pour se rejoindre coniquement.

11. Sellette de couplage selon l'une quelconque des revendications 1 à 11, **caractérisée en ce que** la douille enfichable (4) est guidée de façon mobile à la perpendiculaire de la direction de déplacement (7, 8).

12. Association d'une sellette de couplage et d'un dispositif à enficher (5), le dispositif à enficher (5) comportant un connecteur (25) disposé dans un élément support (26) pour un système de couplage par enfichage comportant une douille enfichable (4) pour assembler des conduits (3) entre un premier et un deuxième véhicule (1,2), le premier véhicule (1) comprenant un véhicule de traction avec une sellette d'attelage (11) comportant un orifice d'introduction cunéiforme (15) et le deuxième véhicule (2) étant un semi-remorque avec un pivot de fusée (29) et l'élément support (26) comprenant un corps de base pour loger le premier connecteur (25) et des moyens pour le montage pivotant de l'élément support (26) sur le deuxième véhicule (2),
**caractérisée en ce que**,
l'orifice d'introduction (15) est délimité par deux bras d'attelage (16) et que sur ou dans l'un des deux bras d'attelage (16), une douille enfichable (4) au moins munie de conduits d'alimentation électrique est disposée de façon telle, que la douille enfichable (4) soit déplaçable d'une position de repos (17) retirée dans une position de connexion (18) saillant dans l'orifice d'introduction (15) et inversement, et
**en ce que** le corps de base a une configuration conçue de façon complémentaire à l'orifice d'introduction (15) cunéiforme de la sellette de couplage (11) et le connecteur (25) est disposé dans un flanc latéral (31) du corps de base.

13. Association selon la revendication 12, **caractérisée en ce que** le connecteur (25) peut se fermer par un couvercle.

14. Association selon la revendication 12 ou 13, **caractérisée en ce que** l'élément support (26) est disposé de façon pivotante sur le semi-remorque, l'angle de pivotement (35) de l'élément support (26) étant délimité par un délimiteur d'angle de rotation (36).

15. Association selon l'une quelconque des revendications 12 à 14, **caractérisée en ce que** l'élément support (26) est aligné dans une position prête à l'introduction au moyen d'au moins un ressort de rappel (37), dans le cas d'un premier et d'un deuxième véhicule (1, 2) séparés.

16. Association selon l'une quelconque des revendications 12 à 15, **caractérisée en ce que** le corps de base est fabriqué en matière plastique.

17. Association selon la revendication 16, **caractérisée en ce que** le corps de base est fabriqué en une matière élastique.

18. Association selon l'une quelconque des revendications 12 à 17, **caractérisée en ce que** le moyen pour le montage pivotant de l'élément support (26) sur le pivot de fusée (29) comprend un étrier (34).

19. Association selon la revendication 18, **caractérisée en ce que** l'étrier (34) est fabriqué en métal.

20. Association selon l'une quelconque des revendications 12 à 19, **caractérisée en ce que** le corps de base de l'élément support (26) est conçu sous la forme d'une clavette (30) dont les flancs latéraux (31) se rejoignent en direction du pivot de fusée (29).

21. Association selon la revendication 20, **caractérisée en ce que** la clavette (30) comporte au moins une encoche longitudinale.

22. Association selon la revendication 21, **caractérisée en ce que** la largeur de la clavette (33) est supérieure à l'orifice d'introduction (15) de la sellette de couplage (11).

23. Association selon l'une quelconque des revendications 12 à 19, **caractérisée en ce que** le corps de base comporte une première et une deuxième entretoise (50, 51), la première entretoise (50) étant disposée sur le pivot de fusée (29) et la deuxième entretoise (51) étant disposée sur l'extrémité de la première entretoise (50) éloignée du pivot de fusée de façon telle, que lorsque les véhicules sont attelés, la deuxième entretoise (51) soit en contact avec la sellette de couplage (11) sur au moins un endroit dans l'orifice d'introduction (15).

24. Association selon l'une quelconque des revendications 12 à 23, pour l'interaction avec une sellette de couplage (11), le pivot de fusée (29) comprenant un disque de montage (38) et un tourillon cylindrique qui le saisit, le tourillon comportant une section supérieure et inférieure (39, 40) de grand diamètre et dans sa zone centrale une section (41) de petit diamètre, pour saisir un verrou de fermeture (46), **caractérisée en ce que** la section supérieure (39) de grand diamètre est conçue avec un évidement (42) de diamètre réduit et avec une collerette (43) de grand diamètre.

25. Association selon la revendication 24, **caractérisée en ce que** l'évidement à diamètre réduit (42) est délimité vers le haut par le disque de montage (38).

26. Association selon la revendication 24 ou 25, **caractérisée en ce que** l'évidement à diamètre réduit (42) est délimité vers le bas par la collerette (43) à grand diamètre

27. Association selon l'une quelconque des revendications 24 à 26, **caractérisée en ce qu'**un coussinet (44) est monté sur l'évidement à diamètre réduit (42).

28. Association selon l'une quelconque des revendications 12 à 17 ou 20 à 23, **caractérisée en ce que** l'élément support (26) est logé du semi-remorque (12) et qu'il peut être amené en engagement avec l'orifice d'introduction (15) de la sellette de couplage (11).

29. Association selon la revendication 12, **caractérisée en ce que** sur le premier véhicule (1) est disposé un appareil de saisie et d'évaluation de données (9) qui est relié d'une part avec un dispositif d'entraînement (6) et d'autre part avec un premier capteur (10) disposé sur le premier véhicule (1), pour capter la position de couplage du dispositif à enficher (5).

30. Association selon la revendication 29, **caractérisée en ce que** le premier capteur (10) est disposé dans la zone de l'orifice d'introduction (15) de la sellette de couplage (11).

31. Association selon la revendication 29 ou 30, **caractérisée en ce que** l'appareil de saisie et d'évaluation des données (9) est relié à un deuxième capteur (13), pour capter l'état de verrouillage de la sellette de couplage (11).

32. Association selon l'une quelconque des revendications 29 à 31, **caractérisée en ce que** l'appareil de saisie et d'évaluation des données (9) ne délivre un signal de validation pour la sortie de la douille enfichable (4) à l'attention du dispositif d'entraînement (6) que si au moins l'un des deux capteurs (10, 13) délivre un signal de validation à l'attention de l'unité de saisie et d'évaluation (9).

33. Association selon l'une quelconque des revendications 29 à 32, **caractérisée en ce que** la douille enfichable (4) et le connecteur (25) sont conçus chacun avec quatre pôles.
